# EUROPEAN PATENT APPLICATION

(11) **EP 1 731 902 A1**
(43) Date of publication of application: **13.12.2006**
(21) Application number: 04720166.0
(22) Date of filing: 12.03.2004
(51) Int. Cl.: G01N 27/416, G01N 27/327

(54) **ELECTRODE FOR SUPEROXIDE ANION AND SENSOR INCLUDING THE SAME**

(71) Applicant: Yuasa, Makoto, Soka-shi, Saitama 340-0021 (JP)
(72) Inventor: YUASA, Makoto, Saitama 340-0021 (JP); OYAIZU, Kenichi, Kamagaya-shi, Chiba 273-0112 (JP); YAMAGUCHI, Aritomo, Yokohama-shi, Kanagawa 227-0034 (JP); ISHIKAWA, Masuhide, Saitama 347-0068 (JP); EGUCHI, Katsuya, Tokyo 203-0054 (JP); KOBAYASHI, Tomohiro, Chiba 270-0136 (JP); TSUTSUI, Satoshi, Hiroshima 729-0252 (JP); TOYODA, Yuujirou, Chiba 270-2232 (JP)
(74) Representative: Stuttard, Garry Philip
(86) International application number: PCT/JP2004/003259
(87) International publication number: WO 2005/088290

(57) **Abstract**

An electrode for superoxide anions **characterized by** comprising a conductive component and, superimposed on a surface thereof, a film resulting from electrolytic polymerization of a metal thiofurylporphyrin/axial ligand complex; and a sensor for measuring a superoxide anion concentration including the same. The electrode for superoxide anions, by virtue of not only the excellent performance of electrode provided with the metal porphyrin complex polymer film, but also the presence of the axial ligand, can prevent poisoning by a catalyst poison such as hydrogen peroxide. Accordingly, in any of *in vitro* or *in vivo* environments, this electrode for superoxide anions enables detection of superoxide anion radicals without suffering any influence from a catalyst poison such as hydrogen peroxide. Moreover, quantitative assay of superoxide anions can be performed by the use of this electrode for superoxide anion in combination with a counter electrode or a reference electrode. Thus, this electrode for superoxide anions can find wide applicability in various fields.

## Description

### TECHNICAL FIELD

The present invention relates to an electrode for superoxide anions such as *in vivo* superoxide anion radicals (O₂⁻·) and to a sensor for measuring the concentration of the superoxide anions using the electrode. More specifically, the present invention relates to an electrode for superoxide anions that can be applied *in vivo* without being affected by a catalyst poison such as hydrogen peroxide that may be present in the system to be assayed, and to a sensor for measuring the concentration of superoxide anions.

### BACKGROUND ART

Superoxide anion radicals (O₂⁻), which are active oxygen species, are produced *in vivo* by oxidation of xanthine, hypoxanthine, and the like into uric acid by xanthine-xanthine oxidase (XOD), reduction of oxygen by hemoglobin, and the like. The superoxide anion radicals have an important role *in vivo* in the synthesis of physiologically active substances, bactericidal action, onset of senility, and the like. Various active oxygen species derived from the superoxide anion radicals are reported to cause various diseases such as cancer. Therefore, measuring the concentration of the active oxygen species including superoxide anion radicals *in vivo* is believed to be important for specifying these various diseases.

When there is no substrate, these superoxide anion radicals become hydrogen peroxide molecules (H₂O₂) and oxygen molecules (O₂) by a dismutation reaction as shown in the formula (1). This dismutation reaction consists of formation of HO₂· by the addition of protons to the superoxide anion radicals, formation of hydrogen peroxide and oxygen molecules by the reaction of HO₂. with oxygen molecules, and formation of hydrogen peroxide and oxygen molecules by collision of HO₂· radicals (formulas (1)-(4)).

2H⁺ + 2O₂⁻· → H₂O₂ + O₂ (1)

H⁺ + O₂⁻· → HO₂· (2)

HO₂· + O₂⁻· + H⁺ → H₂O₂ + O₂ (3)

HO₂· + HO₂· → H₂O₂ + O₂ (4)

In this reaction system, the superoxide anion radical functions as an electron acceptor (oxidizing agent), an electron donor (reducing agent), and a hydrogen ion acceptor (base). The former two functions have been applied to measuring the concentration of superoxide anion radicals. For example, the concentration of superoxide anion radicals was measured using the reaction for converting ferricytochrome c (trivalent) into ferrocytochrome c (divalent), the reaction for producing blue formazan from nitro blue tetrazolium (NBT), and the reaction for reducing tetranitromethane (TNM). All of these reactions were carried out on an *in vitro* basis.

On the other hand, a method for quantitatively measuring the concentration of superoxide anion radicals *in vivo* has been investigated. For example, McNeil et al., Tariov et al., and Cooper et al. reported that the concentration of superoxide anion radicals can be electrochemically determined by preparing an enzyme electrode (a cytochrome c-immobilized electrode) by modifying the surface of a gold or platinum electrode with an enzyme, N-acetylcysteine, and immobilizing a protein such as cytochrome c, which is a metal protein having an iron complex referred to as hem as an oxidation-reduction center, via an S-Au bond (C. J. McNeil et al., Free Radical Res. Commun., 7, 89 (1989); M. J. Tariov et al., J. Am. Chem. Soc. 113, 1847 (1991); and J. M. Cooper, K. R. Greenough and C. J. McNeil, J. Electroanal. Chem., 347, 267 (1993)).

The method is based on the following measurement principle. That is, cytochrome c (trivalent) (cyt.c(Fe³⁺)) reacts with superoxide anion radicals and is reduced to cytochrome c (divalent) (cyt.c(Fe²⁺)) according to the reaction formula (5). Next, cytochrome c (divalent) reduced with O₂⁻ is electrochemically reoxidized according to the reaction formula (6). The oxidation current generated in this reaction is measured, whereby the concentration of the superoxide anion radicals is quantitatively determined in an indirect manner.

cyt. c (Fe³⁺) + O₂⁻ → cyt. c (Fe²⁺) + O₂ (5)

cyt. c (Fe²⁺) → cyt. c (Fe³⁺) + e⁻ (6)

However, since cytochrome c is an electron transfer protein which is present *in vivo* on intracellular mitochondrial membranes, a large number of cells (e.g. 10⁵-10⁶ cells) is required to form an electrode on which cytochrome c is immobilized in an amount sufficient for the measurement. In addition, the enzyme used is deactivated in several days.

The inventors of the present invention have previously found that an electrode produced by forming a polymer film of a metal porphyrin complex, formed by introducing a metal atom into the center of a porphyrin compound, on the surface of a conductive component does not require a large amount of enzymes, is free from the problem of deactivation, and can be applied to detecting active oxygen species and measuring their concentration. The inventors have applied for a patent (WO 03/054536) based on this invention.

However, since hydrogen peroxide is generated and serves as a catalyst poison for polymer films of a metal porphyrin complex in the dismutation reaction of superoxide anion radicals shown in the above-mentioned reaction, a countermeasure for avoiding influence of the hydrogen peroxide was necessary for measuring superoxide anions.

Therefore, development of an electrode that can easily measure superoxide anion radicals and is free from the influence of a catalyst poison generated such as hydrogen peroxide and the like has been desired.

### DISCLOSURE OF THE INVENTION

As a result of extensive studies to improve performance of an electrode having a metal porphyrin complex polymer film formed on the surface of a conductive component, the inventors of the present invention have found that the effect of poisoning can be prevented by using a complex of a porphyrin compound with a specific type of substitution group on the meso position and a specific axial ligand.
This finding has led to the completion of the present invention.

Specifically, the present invention provides an electrode for superoxide anions comprising a film produced by electrolytic polymerization of a metal thiofurylporphyrin/axial ligand complex formed on the surface of a conductive component.

The present invention further provides a sensor for measuring the concentration of superoxide anions comprising an electrode for active oxygen species comprising a polymer film of a metal thiofurylporphyrin/axial ligand complex formed on the surface of a conductive component, a counter electrode, and a reference electrode.

Furthermore, the present invention provides a method for detecting superoxide anions in a sample comprising measuring the current produced by an oxidation-reduction reaction between the metal in a polymer film of a metal thiofurylporphyrin/axial ligand complex and the superoxide anions, using the above sensor.

### BRIEF DESCRIPTION OF THE DRAWING

Figure 1 is a drawing showing an example of a three-electrode cell used for preparing the electrode of the present invention.
Figure 2 is a drawing showing an example of a two-chamber three-electrode cell used for preparing the electrode of the present invention.
Figure 3 is a drawing showing an example of a needle-type electrode and the two-chamber three-electrode cell used for preparing the electrode of the present invention, wherein (A) is the two-chamber three-electrode cell, (B) is the entire needle-type electrode, and (C) is the tip of the needle-type electrode.
Figure 4 is a drawing showing an improved needle-type electrode used for preparing the electrode of the present invention, wherein (A) shows the entire improved needle-type electrode and (B) shows the tip of the improved needle-type electrode.
Figure 5 is a drawing showing an example of the measuring device used for measuring active oxygen species.
Figure 6 is a drawing showing another example of the measuring device used for measuring active oxygen species.
Figure 7 shows a graph of the UV-visible spectrum of [5,10,15,20-tetrakis(3-thiofuryl)porphyrinate iron (III)] bromide.
Figure 8 shows a graph of the UV-visible spectrum of [5,10,15,20-tetrakis(3-thiofuryl)porphyrinate iron (III) bis(imidazolyl)] bromide.
Figure 9 shows a graph of the UV-visible spectrum of 5,10,15,20-tetrakis(3-thiofuryl)porphyrin.
Figure 10 is a graph showing a CV curve during electrolytic polymerization of the product of the present invention.
Figure 11 is a graph showing the change over time in the oxidation current during addition of XOD in Comparative Product 1.
Figure 12 is a graph showing the change over time in the oxidation current during addition of XOD in Invention Product 1.

### BEST MODE FOR CARRYING OUT THE INVENTION

The electrode for superoxide anions of the present invention (hereinafter referred to as "electrode") comprises a polymer film of a metal thiofurylporphyrin/axial ligand complex formed on the surface of a conductive component.

Any component commonly used for electrodes can be used as a conductive component for the electrode of the present invention without specific limitations. Examples include carbons such as glassy carbon (GC), graphite, pyrolytic graphite (PG), highly oriented pyrolytic graphite (HOPG), and activated carbon, noble metals such as platinum, gold, and silver, and In₂O₃/SnO₂ (ITO). Of these, glassy carbon is particularly preferable in view of economical efficiency, processability, lightweight, and the like. There are no specific limitations to the shape of the conductive component, inasmuch as such a shape is usable as an electrode. Various shapes such as a cylinder, square pillar, needle, and fiber can be used. A needle-like shape is preferable for measuring the concentration of superoxide anions *in vivo,* for example.

A polymer film of a metal thiofurylporphyrin/axial ligand complex is formed on the surface of the conductive component in the present invention. As examples of the metal thiofurylporphyrin/axial ligand complex for producing the polymer film, the compounds of the following formula (I) can be given. 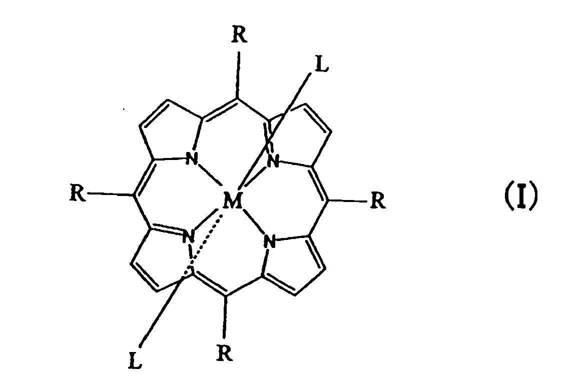 wherein M is a metal of which the oxidation-reduction potential between the two valence form and the three valence form is higher than the oxidation potential of O₂⁻˙ and lower than the oxidation potential of water, at least one of the four Rs indicates a thiofuryl group, and at least one of the two Ls indicates an axial ligand having a coefficient of complex formation of 10⁴ M⁻² or more that produces a stable 5 coordinated complex or 6 coordinated complex.

In the metal thiofurylporphyrin complex represented by the above formula (I), iron (III), manganese (III), and the like can be given as the metal of which the oxidation-reduction potential between the two valence form and the three valence form is higher than the oxidation potential of O₂⁻ and lower than the oxidation potential of water represented by M. As examples of the thiofuryl group represented by R, a 2-thiofuryl group, a 3-thiofuryl group, and the like can be given. As the axial ligand represented by L having a coefficient of complex formation or more that produces a stable 5 coordinated complex or 6 coordinated complex, imidazole derivatives, for example, alkylimidazoles such as methylimidazole, ethylimidazole, propylimidazole, and dimethylimidazole; arylalkylimidazoles such as benzylimidazole; benzimidazole; and the like can be given.

The metal thiofurylporphyrin/axial ligand complex of the present invention is a complex compound having an axial ligand and a metal atom coordinated to a thiofurylporphyrin compound. This thiofurylporphyrin compound is a cyclic compound formed from four pyrrole rings in which four methine groups bond at each of the α-positions and the four nitrogen atoms are positioned face-to-face toward the center, the compound containing at least one thiofuryl group as a substituent of a methine group (R in the formula (I)). Other substituents of other methine groups may be either the same thiofuryl group or another group such as a pyrrolyl group, furyl group, mercaptophenyl group, aminophenyl group, hydroxyphenyl group, alkyl group, or aryl group, or may be hydrogen.

As examples of the thiofurylporphyrin compound used in the present invention, 5,10,15,20-tetrakis(2-thiofuryl)porphyrin, 5,10,15,20-tetrakis(3-thiofuryl)porphyrin, [5,10,15-tris(2-thiofuryl)-20-mono(phenyl)]porphyrin, [5,10,15-tris(3-thiofuryl)-20-mono(phenyl)]porphyrin, [5, 1 0-bis(2-thiofuryl)-15,20-di(phenyl)]porphyrin, [5,10-bis(3-thiofuryl)-15,20-di(phenyl)]porphyrin, [5,15-bis(2-thiofuryl)-10,20-di(phenyl)]porphyrin, [5,15-bis(3-thiofuryl)-10,20-di(phenyl)]porphyrin, [5-mono(2-thiofuryl)-10,15,20-tri(phenyl)]porphyrin, and [5-mono(3-thiofuryl)-10,15,20-tri(phenyl)]porphyrin can be given.

At least one of the axial ligands (L in the formula (I)) to the thiofurylporphyrin compound must be the above-mentioned imidazole derivative. The other axial ligands may be either the imidazole derivative or other compounds, for example, a nitrogen-containing axial ligand such as pyridine and its derivatives, aniline and its derivatives, histidine and its derivatives, and trimethylamine and its derivatives, a sulfur-containing axial ligand such as thiophenol and its derivatives, cysteine and its derivatives, and methionine and its derivatives, or an oxygen-containing axial ligand such as benzoic acid and its derivatives, acetic acid and its derivatives, phenol and its derivatives, aliphatic alcohol and its derivatives, and water.

A metal thiofurylporphyrin/axial ligand complex can be formed as a complex compound by inserting a metal atom (M in the formula (I)) in the thiofurylporphyrin compound having the above-mentioned axial ligands. To form this complex compound, a conventional method for producing a metal complex such as metalation can be used to introduce a metal atom into the center of a thiofurylporphyrin/axial ligand complex.

Various polymerization methods such as electrolytic polymerization, solution polymerization, and heterogeneous polymerization can be used in the present invention to form the polymer film of a metal thiofurylporphyrin/axial ligand complex on the surface of the conductive component. Of these, electrolytic polymerization is preferable. Specifically, the polymer film of a metal thiofurylporphyrin/axial ligand complex can be formed on the surface of the conductive component by polymerization. The polymerization is carried out by two-electrode (working electrode and counter electrode) electrolysis or three-electrode (working electrode, counter electrode, and reference electrode) electrolysis, including three-electrode constant potential electrolysis, three-electrode constant current electrolysis, three-electrode reversible potential sweep electrolysis, and three-electrode pulse electrolysis, using a suitable supporting electrolyte such as tetrabutylammonium perchlorate (TBAP: Bu₄NClO₄), tetrapropylammonium perchlorate (TPAP: Pr₄NClO₄), or tetraethylammonium perchlorate (TEAP: Et₄NClO₄) in an organic solvent such as dichloromethane, chloroform, or carbon tetrachloride, using the conductive component as the working electrode, an insoluble electrode such as a noble-metal electrode (e.g. Pt electrode), a titanium electrode, a carbon electrode, or a stainless steel electrode as the counter electrode, and a saturated calomel electrode (SCE), a silver-silver chloride electrode, or the like as the reference electrode.

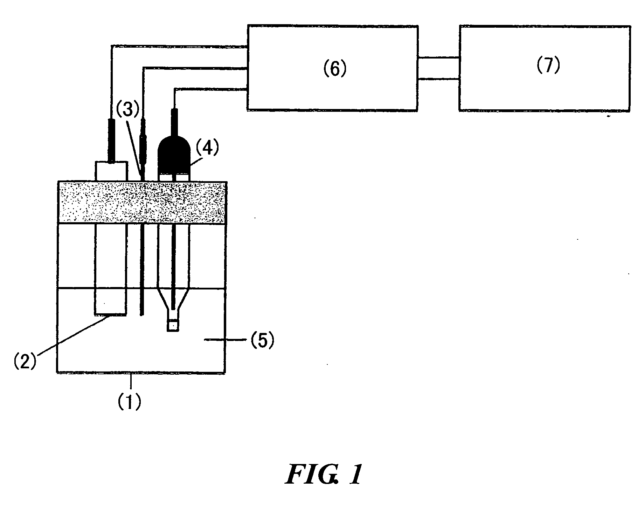

The electrolytic polymerization is preferably carried out by reversible potential sweep electrolysis or the like using a three-electrode cell as shown in Figure 1, for example. In Figure 1, 1 indicates a cell container; 2, a conductive component; 3, a counter electrode; 4, a reference electrode; 5, a metal thiofurylporphyrin/axial ligand complex solution; 6, a potentiostat; and 7, an X-Y recorder.

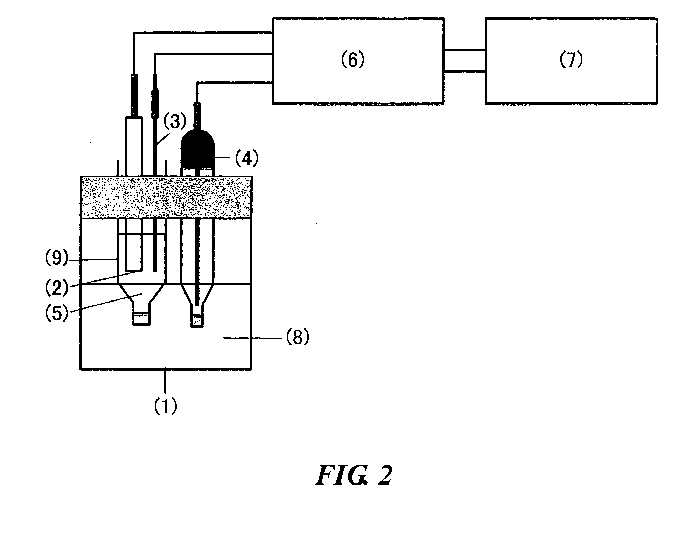

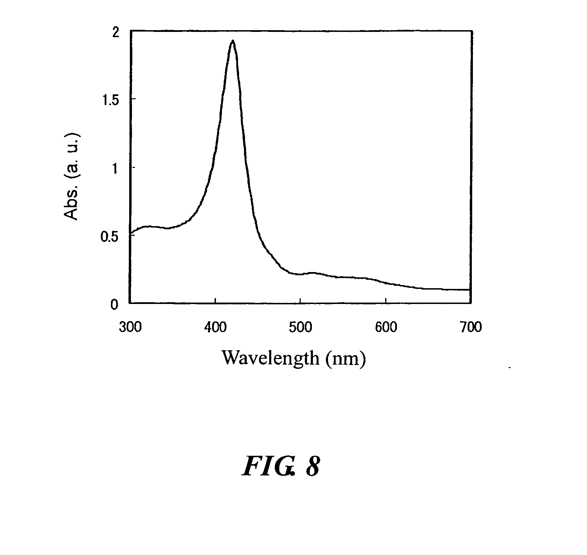

When using a high concentration metal thiofurylporphyrin/axial ligand complex solution, a two-chamber three-electrode cell as shown in Figure 2, for example, may be used. In Figure 2, numerals 1-7 indicate the same items as in Figure 1, 8 indicates an electrolyte solution, and 9 is a sample vial.

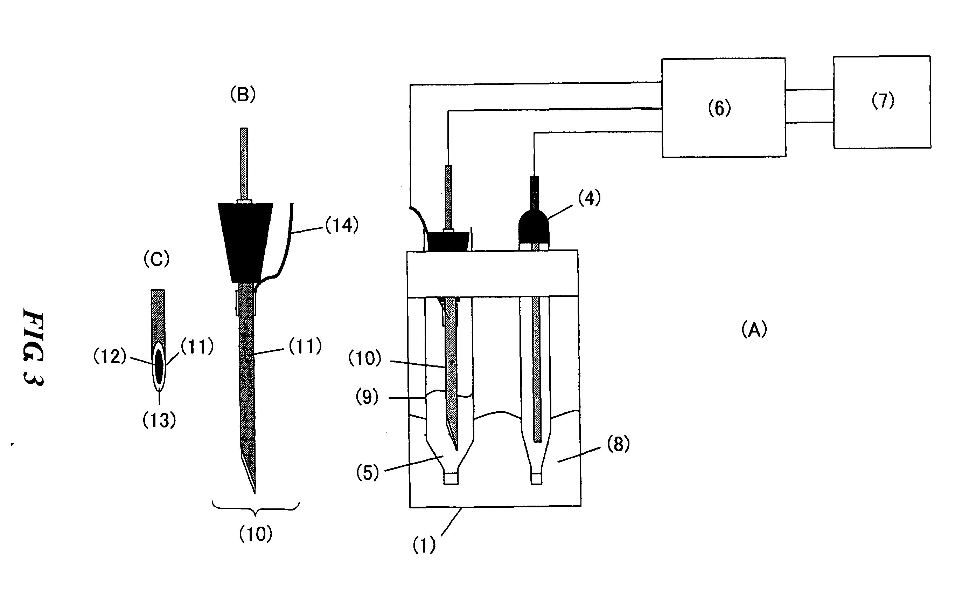

Taking into account *in vivo* measurement, complex measurement, clinical diagnosis and treatment, and the like, to produce a simplified electrode for superoxide anions (needle-type electrode), a needle-type electrode 10 and a three-electrode cell as shown in Figures 3(A) and 3(B), for example, may be used. In Figure 3, 1 indicates a cell container; 4, a reference electrode; 5, a metal thiofurylporphyrin/axial ligand complex solution; 6, a potentiostat; 7, an X-Y recorder; 8, an electrolyte solution; 9, a sample vial; 10, a needle-type electrode; 11, a counter electrode; 12, the end of a conductive component (metal thiofurylporphyrin/axial ligand complex polymer film-formed area); 13, an electrical insulating material; and 14, a counter electrode wire.

As shown in Figure 3(C), this electrode is prepared by filling a small tube made of an electrical insulating material 13 with a conductive component. This small tube is covered with a material such as a metal used as the counter electrode 11. The electrode can be used as a needle-type electrode by forming a metal thiofurylporphyrin/axial ligand complex polymer film on the surface at the tip 12 of the conductive component.

The thickness of the polymer film of the metal thiofurylporphyrin/axial ligand complex is appropriately determined according to the type of the electrode and the metal thiofurylporphyrin/axial ligand complex, and the like. A thickness of 10 µm or less is preferable from the viewpoint of electrode activity, modification stability, and the like. The conductivity is preferably 10⁻³ S/cm or more.

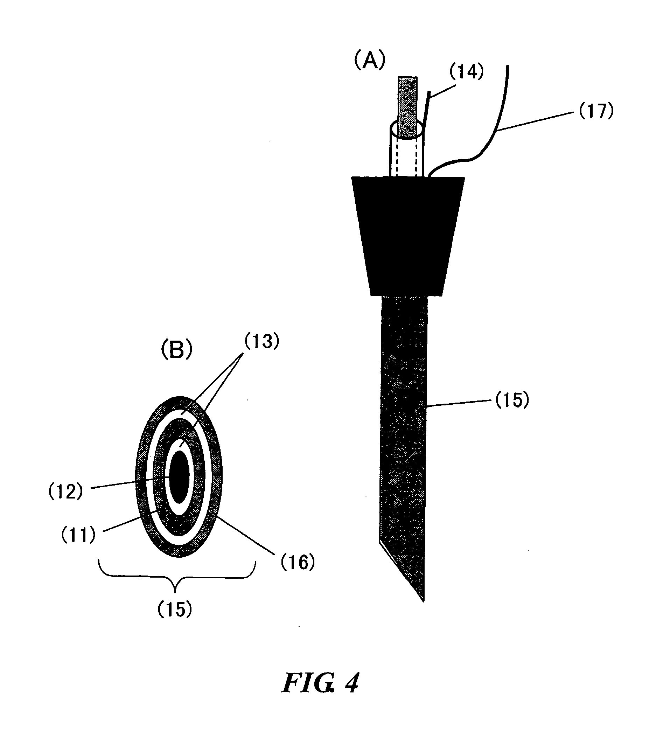

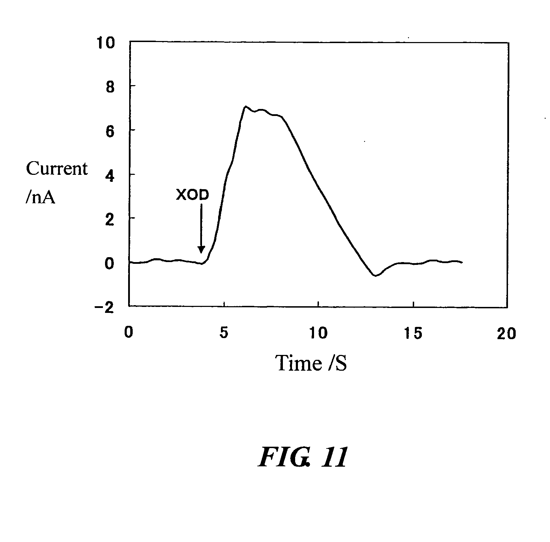

To produce a simplified electrode for superoxide anions (improved needle-type electrode), based on the simplified electrode for superoxide anions (needle-type electrode) shown in Figure 3, with an objective of removing an unnecessary current in the living body, current noise, and the like and of improving sensitivity, signal/noise ratio (S/N ratio), and the like, an improved needle-type electrode 15 as shown in Figure 4(A) and a three-electrode cell as shown in Figure 3(A) may be used, for example. In Figure 4, 11 indicates a counter electrode; 12, a tip of the conductive component (metal porphyrin polymer film-formed area); 13, an electrical insulating material; 14, a counter electrode wire; 15, an improved needle-type electrode; 16, a ground; and 17, a ground wire.

As shown in Figure 4(B), this electrode has a conductive component inserted in an electrical insulating material 13 (two-layer structure). The electrical insulating material 13 is placed in a counter electrode material 11 (three-layer structure), the counter electrode material 11 is housed in an electrical insulating material 13 (four-layer structure), and finally, the outside of the resulting small tube is coated with a material such as a metal capable of functioning as a ground (five-layer structure). The coating acts as the ground 16. The electrode can be used as an improved simplified electrode for superoxide anions (improved needle-type electrode) by forming a metal porphyrin polymer film on the surface at the tip 12 of the conductive component.

The thickness of the polymer film of the metal thiofurylporphyrin/axial ligand complex is appropriately determined according to the type of the electrode and the metal thiofurylporphyrin/axial ligand complex, and the like. A thickness of 10 µm or less is preferable from the viewpoint of electrode activity, modification stability, and the like. The conductivity is preferably 10⁻³ S/cm or more. This improved needle-type electrode can also be used for measuring composite materials and the like. In such a case, it is possible to fabricate an electrode having a structure of up to ten or more layers. As the material for the ground, a noble metal such as platinum, gold, and silver, titanium, stainless steel, a corrosion-resistant alloy such as an iron-chromium alloy, carbon, or the like can be used. Since the ground frequently comes in contact with the inside of living bodies, a material with a high safety such as a noble metal (e.g. platinum, gold, silver), titanium, stainless steel, and carbon is preferable.

To use the electrode of the present invention for measuring superoxide anions, particularly for measuring the concentration of superoxide anions, it is preferable to combine the electrode with (1) a counter electrode and a reference electrode (three-electrode type) or (2) a counter electrode (two-electrode type). As the material for this counter electrode, a noble metal such as platinum, gold, and silver, titanium, stainless steel, a corrosion-resistant alloy such as an iron-chromium alloy, carbon, or the like can be used. Since the counter electrode frequently comes in contact with the inside of living bodies, a material with a high safety such as a noble metal (e.g. platinum, gold, silver), titanium, stainless steel, and carbon is preferable.

As the reference electrode, various reference electrodes such as a silver/silver chloride electrode and a mercury/mercuric chloride electrode can be usually used. A solid standard electrode can also be used. In addition, other materials such as noble metals such as platinum, gold, and silver, titanium, stainless steel, a corrosion resistant alloy such as iron-chromium alloy, carbons, and the like can also be used.

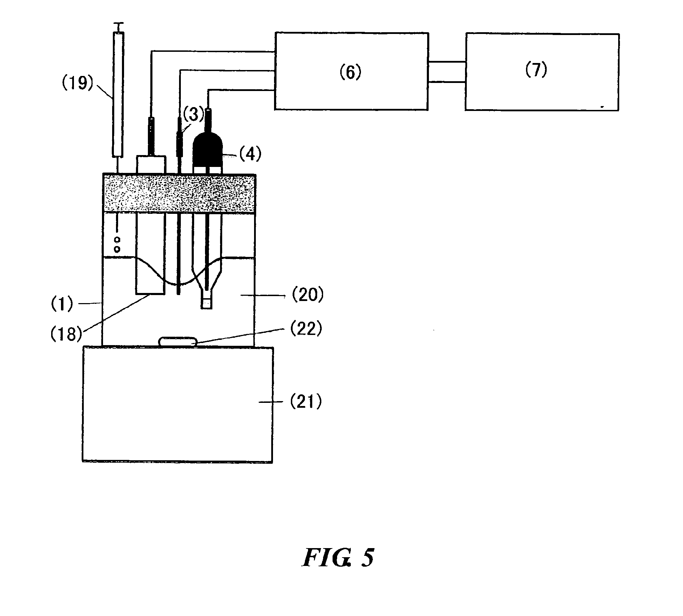

A specific example of the measuring device that can be used for measuring superoxide anions is shown in Figure 5. In Figure 5, numerals 1, 3, 4, 6, and 7 indicate the same items as in Figure 1, 18 indicates a measuring electrode (working electrode), 19 indicates a microsyringe, 20 indicates a solution to be measured, 21 indicates a magnetic stirrer, and 22 is a stirrer.

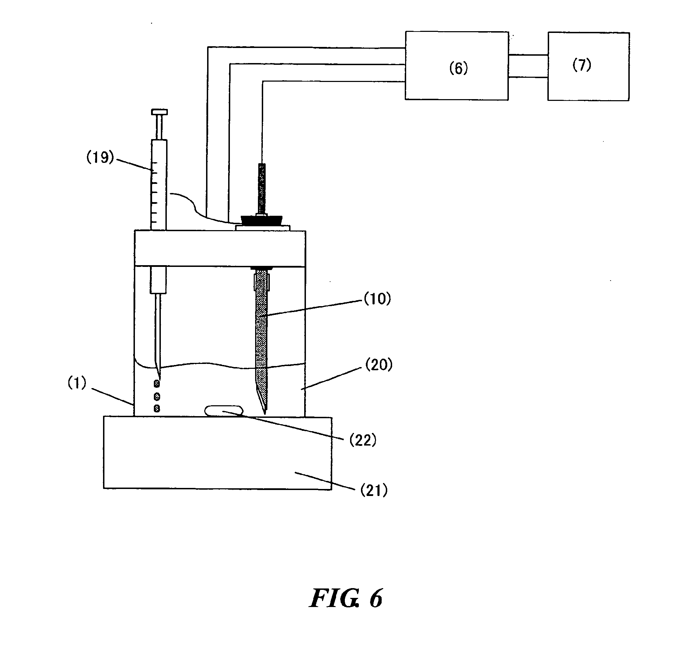

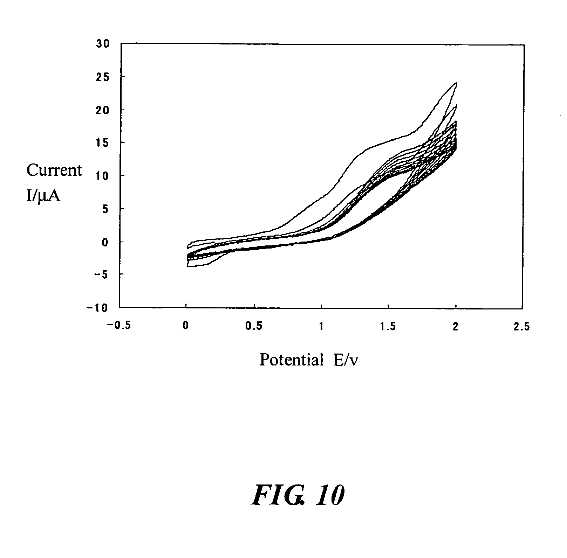

Another specific example of the measuring device used for measuring superoxide anions is shown in Figure 6. In Figure 6, numerals 1, 6, 7, and 19-22 indicate the same items as in Figure 4 and 10 indicates a needle-type electrode.

Although the electrode for superoxide anions of the present invention can be used as an electrode for detecting superoxide anions using the above-described device, the electrode can also be used as a sensor for measuring the concentration of superoxide anions by using in combination with (1) a counter electrode and a reference electrode (three-electrode type) or (2) a counter electrode (two-electrode type). If the sensor for measuring the concentration of superoxide anions of this configuration is used in a system containing superoxide anion radicals, for example, the metal in the metal thiofurylporphyrin/axial ligand complex forming the polymer film is reduced by the superoxide anion radicals. For example, if the metal is iron, Fe³⁺ is reduced to Fe²⁺ by the superoxide anion radicals (formula (7)).

If the Fe²⁺ reduced by the superoxide anion radicals is electrochemically reoxidized (formula (8)) while maintaining the electrode for measuring the concentration at a potential (in the case of the three-electrode type (1)) or a voltage (in the case of the two-electrode type (2)) to a degree at which Fe²⁺ can be oxidized, the current (oxidation current) flowing in this instance corresponds to the concentration of the superoxide anion radicals. Therefore, the concentration of the superoxide anion radicals dissolved in the sample solution can be quantitatively detected from the oxidation current. Specifically, the concentration of the superoxide anion radicals can be determined based on the same principle of the above formulas (5) and (6).

Por (Fe³⁺) + O₂⁻ · → Por (Fe²⁺) + O₂ (7)

Por (Fₑ²⁺) → Por (Fe³⁺) + e⁻ (8)

wherein "Por" indicates porphyrin.

Since the electrode for superoxide anions of the present invention has a polymer film of a metal thiofurylporphyrin/axial ligand complex on the surface of a conductive component, not only is the electrode affected by a catalyst poison such as hydrogen peroxide only with difficulty, but also the polymer film of the metal thiofurylporphyrin/axial ligand complex is strong as compared with an electrode of a conventional polymer film of a metal porphyrin. The electrode can therefore withstand repeated use. In addition, since the polymer film of the metal thiofurylporphyrin/axial ligand complex is formed by electrolytic polymerization or the like, preparation of the electrode of the present invention is very easy as compared with a conventional electrode. The electrode of the present invention can be produced in a shape particularly suitable for application *in vivo,* for example, a needle-like shape.

In this manner, the electrode for superoxide anions of the present invention can not only detect superoxide anion radicals, but also quantitatively measure the superoxide anions by combining with a counter electrode and reference electrode in any environment including *in vivo* environment as well as *in vitro* environment. The electrode of the present invention therefore can be widely used in various fields.

Specifically, various diseases such as cancer can be specified by measuring the concentration of superoxide anions *in vivo,* for example, in blood.

On the other hand, with regard to the application in an *in vitro* environment, decomposition conditions of food can be observed by measuring superoxide anions and their concentration in food. Water pollution conditions can also be observed by measuring the superoxide anions and their concentration in tap water, sewage water, and the like.

Furthermore, the concentrations of superoxide dismutase (SOD), which is an enzyme with a function of eliminating superoxide anion radicals and the anions, can be measured by determining the extinction degree of the superoxide anion radicals when a sample containing the SOD is added.

The reason that the electrode for superoxide anions can prevent poisoning by a catalyst poison such as hydrogen peroxide is thought to be as follows.

A catalyst poison such as hydrogen peroxide is thought to poison a substance by coordinating to a metal such as iron which is the active center of the substance. If an imidazole, which is an axial ligand, previously coordinates to and occupies the fifth or sixth coordination position of iron, hydrogen peroxide cannot coordinate to the iron (since the first and fourth positions of iron are already coordinated by pyrrole of porphyrin). In this manner, because an axial ligand such as an imidazole coordinates to iron of the active center to prevent poisoning by hydrogen peroxide, superoxide anion radicals can be stably measured even in the presence of hydrogen peroxide.

### EXAMPLE

The present invention will be described in more detail by reference examples, examples, comparative examples, and test examples, which should not be construed as limiting the present invention.

### Reference Example 1

### Synthesis of metal thiofurylporphyrin/axial ligand complex (1)

0.036 g of 5,10,15,20-tetrakis(3-thiofuryl)porphyrinate iron (III) bromide and 200 µl of 1-methylimidazole were dissolved in 1 ml of distilled dichloromethane and the mixture was stirred at room temperature for five hours. The reaction mixture was evaporated to dryness using an evaporator to obtain [5,10,15,20-tetrakis(3-thiofuryl)porphyrinate iron (III) bis(1-methylimidazolyl)] bromide (yield: 92%).
UV (CHCl₃, nm, λmax): 419

Imidazole coordination was confirmed from the fact that the UV absorbance wavelength differs from that of the imidazole-free complex (λmax = 424 nm). In addition, a hexa coordination structure was confirmed from the fact that in the magnetic circularly polarized light dichroism spectrum, the polarization angle in the neighborhood of 580 nm and 600 nm decreased due to coordination of imidazole.

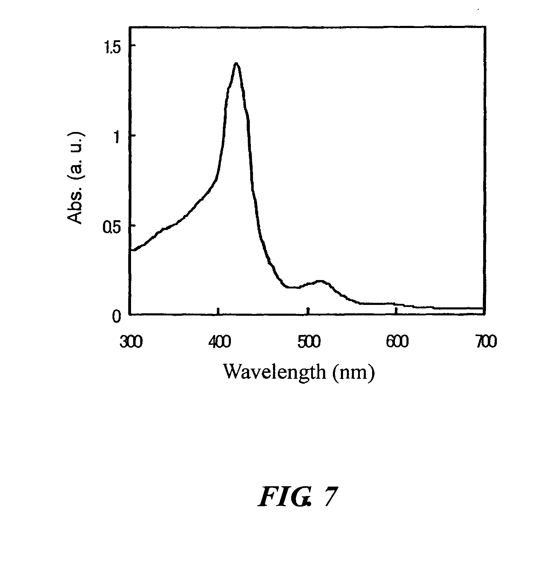

Figure 7 shows the UV spectrum of 5,10,15,20-tetrakis(3-thiofuryl)porphyrinate iron (III) bromide of the raw material. Figure 8 shows the UV spectrum of [5,10,15,20-tetrakis(3-thiofuryl)porphyrinate iron (III) bis(1-methylimidazolyl)] bromide of the product.

### Reference Example 2

### Synthesis of metal thiofurylporphyrin/axial ligand complex (2)

0.041 g of 5,10,15,20-tetrakis(3-thiofuryl)porphyrinate iron (III) bromide and 0.08 g of 1-benzylimidazole were dissolved in 3 ml of distilled chloroform and the mixture was stirred at room temperature for five hours. The reaction mixture was evaporated to dryness using an evaporator to obtain [5,10,15,20-tetrakis(3-thiofuryl)porphyrinate iron (III) bis(1-benzylimidazolyl)] bromide (yield: 90%).
UV (CHCl₃, nm, λmax): 418

Imidazole coordination was confirmed from the fact that the UV absorbance wavelength differs from that of the imidazole-free complex (λmax = 424 nm)

### Reference Example 3

(1) A solution of 50 ml of propionic acid, 2.0 ml of 3-thiophenecarboaldehyde, and 1.4 ml of pyrrole was refluxed at 90°C for one hour with continuous stirring. After the reaction, the reaction solution was allowed to cool to room temperature, cooled with ice, and added dropwise to 200 ml of methanol. The precipitate was separated by filtration, washed with methanol, and purified by silica gel column chromatography (developing solvent: chloroform). As a result, 5,10,15,20-tetrakis(3-thiofuryl)porphyrin was obtained at a yield of 19%.
   ¹H NMR(CDCl₃, ppm): δ
   -2.7 (s, 2H), 7.7 (t, 4H), 8.0 (m, 8H), 8.9 (s, 8H)

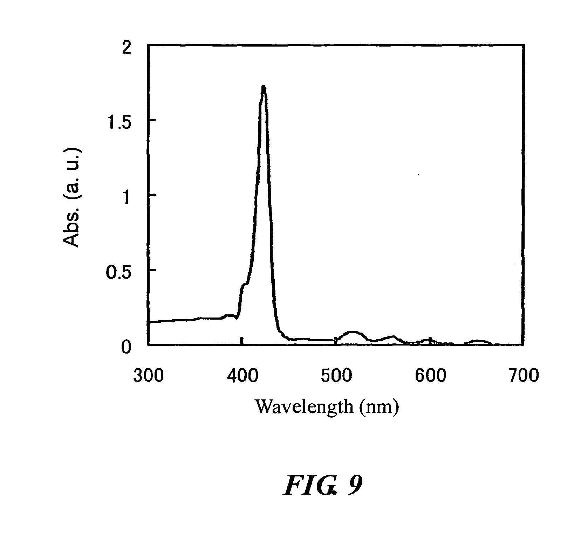

   Figure 9 shows the UV spectrum of the 5,10,15,20-tetrakis(3-thiofuryl)porphyrin.
(2) Next, 100 mg of reduced iron was added to 10 ml of hydrobromic acid (48%) in a strict nitrogen atmosphere and the mixture was stirred at 100°C. After evaporating the solvent to dryness, 250 mg of 5,10,15,20-tetrakis(3-thiofuryl)porphyrin and 200 ml of dimethylformamide were added and the mixture was stirred for four hours in an nitrogen atmosphere. Then, after the addition of 200 ml of chloroform, the reaction product was washed with ion-exchanged water, dehydrated, and evaporated to dryness, followed by purification using alumina column chromatography (developing solvent: chloroform/methanol = 20/1). After the addition of 48% hydrobromic acid to the resulting eluate, the mixture was dehydrated and evaporated to dryness, followed by recrystallization to obtain 5,10,15,20-tetrakis(3-thiofuryl)porphyrinate iron (III) bromide (yield: 54%).
UV (CHCl₃, nm, λmax): 424

### Reference Example 4

Improvement of method for synthesizing 5,10,15,20-tetrakis(3-thiofuryl)porphyrinate iron (III) bromide of Reference Example 3

A 300 ml round bottom flask was charged with 150 ml of proprionic acid, 8.0 ml of 3-thiophenecarbaldehyde, and 5.6 ml of pyrrole. The resulting solution was refluxed at 160°C for one hour while stirring. After standing the reaction mixture to cool to room temperature, 200 ml of methanol cooled to 0°C was added. The resulting precipitate was collected by filtration by suction and dried under reduced pressure (120°C, 6 hours). The resulting crystals in the form of black powder were dissolved in chloroform. Insoluble components were removed by filtration and purified by silica gel column chromatography (developing solvent: chloroform) and recrystalization. After drying under reduced pressure, the product of 5,10,15,20-tetrakis(3-thiofuryl)porphyrin was obtained as black purple microcrystals (yield: 20%).
¹H NMR (CDCl₃, ppm): δ
-2.7 (s, 2H), 7.7 (t, 4H), 8.0 (m, 8H), 8.9 (s, 8H)

Next, 6 ml of hydrobromic acid (48%) was introduced to a 500 ml four-neck flask of which the inside was maintained in a pure argon atmosphere. After adding 200 mg of reduced iron, the mixture was reacted at 90°C with stirring. The solution was evaporated and the residue was dried to obtain a solid of FeBr₂, to which 150 ml of dimethylformamide (DMF) was added under a pure argon atmosphere, followed by the addition of 150 mg of 5,10,15,20-tetrakis(3-thiofuryl)porphyrin. The mixture was refluxed for six hours in a pure argon atmosphere (140°C). After distilling the DMF, 200 ml of chloroform was added to dissolve the solid. The resulting solution was washed with ion-exchanged water. After adding two drops of hydrobromic acid, the solvent was distilled away and the residue was dried under reduced pressure (100°C, 6 hours). The product of 5,10,15,20-tetrakis(3-thiofuryl)porphyrinate iron (III) bromide was obtained at a yield of 74%.

### Example 1

### Preparation of electrode for superoxide anions (1)

A glassy carbon (GC) electrode (diameter: 1.0 mm) was polished using an alumina polishing agent (0.05 µm). After washing with water, the electrode was further washed with methanol. A polymer film was formed on the surface of this electrode by electrolytic polymerization using the following electrolytic solution and procedure to prepare a glassy carbon electrode with a polymer film in which two imidazole molecules were coordinated to 5,10,15,20-tetrakis(3-thiofuryl)porphyrinate iron (III) formed on the surface (Invention Product 1).

### (Sample solution)

[5,10,15,20-tetrakis(3-thiofuryl)porphyrinate iron (III) bis(imidazolyl)] bromide synthesized in Reference Example 1 was used as a metal thiofurylporphyrin/axial ligand complex at a concentration of 0.001 M. As a solvent, (anhydrous) dichloromethane containing 0.1 M tetrabutylammonium perchlorate (Bu₄NClO₄/TBAP) as a supporting electrolyte was used. Oxygen dissolved in the solvent was removed using argon gas.

### (Procedure)

Electrolytic polymerization was carried out by reversible potential sweep electrolysis using a three-electrode cell having a configuration shown in Figure 1 (working electrode: GC, counter electrode: Pt line, reference electrode: SCE). The sweep range was 0 to 2.0 V for SCE in the case of preparing an electrode for superoxide anions using a polymer film in which two imidazole molecules were coordinated to 5,10,15,20-tetrakis(3-thiofuryl)porphyrinate iron (III); the range was -0.2 to 1.8 V for SCE in the case of preparing an electrode for superoxide anions using a polymer film in which two 1-benzylimidazole molecules were coordinated to the 5,10,15,20-tetrakis(3-thiofuryl)porphyrinate iron (III) of Reference Example 2. The sweep rate was 0.05 V/s in both cases. The number of times of sweep was 15 in both cases. The cyclic voltammograms obtained in this electrolytic procedure (CV curve) are shown in Figure 9 and Figure 10.

Figure 10 shows a CV curve during electrolytic polymerization of the electrode (Invention Product 1) prepared using [5,10,15,20-tetrakis(3-thiofuryl)porphyrinate iron (III) bis(imidazolyl)] bromide as the metal thiofurylporphyrin/axial ligand complex. The results confirmed that a polymer film of the metal thiofurylporphyrin/axial ligand complex (a complex in which two imidazole molecules were coordinated to 5,10,15,20-tetrakis(3-thiofuryl)porphyrinate iron (III)) was formed on the surface of the GC electrode.

### Comparative Example 1

### Preparation of comparative electrode for superoxide anions

A glassy carbon electrode covered with a metal thiofurylporphyrin polymer film (Comparative Product 1) was prepared in the same manner as in Reference Example 3 using metal thiofurylporphyrin [5,10,15,20-tetrakis(3-thiofuryl)porphyrinate iron (III) bromide] to which no axial ligand is coordinated prepared in Reference Example 3.

### Test Example 1

### Measurement of amount of superoxide anion radicals:

The amount of superoxide anion radicals was measured using the electrodes of Invention Product 1 and Comparative Product 1.

First, the electrode of Invention Product 1 or Comparative Product 1 as a working electrode and a Pt line as a counter electrode were put into a cell container and a silver/silver chloride electrode (Ag/AgCl) was used as a reference electrode to form a three-electrode cell for the test. The apparatus shown in Figure 5 was prepared using the three-electrode cell for the test at the center. In this test, the potential sweep range was set at -0.2 to 0.25 V (for Ag/AgCl) for the electrode of Comparative Product 1 and at -0.5 to 0.5 V (for Ag/AgCl) for the electrode of Invention Product 1. Measurements were carried out using several sweep rates.

A 2 mM aqueous potassium hydroxide solution containing 14.4 mM xanthine and a 10 mM Tris buffer solution containing 10 mM potassium chloride (pH 7.5) were prepared. 0.365 ml of the former and 14.635 ml of the latter were mixed to prepare a 0.35 mM xanthine solution, which was used as a test solution. Oxygen dissolved in the test solution was removed using high-purity argon gas.

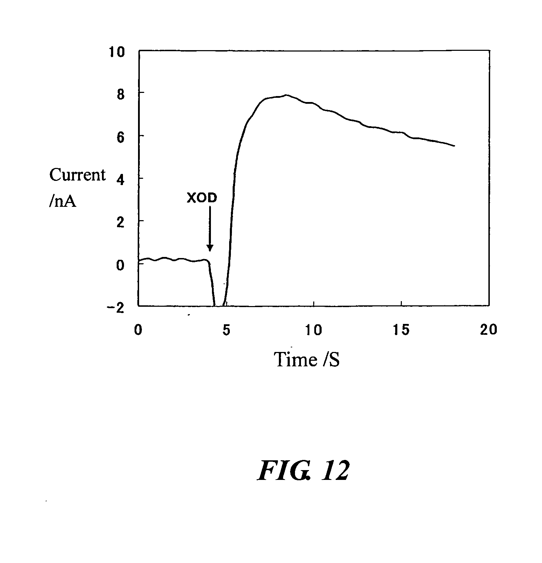

Second, the test solution was added to the three-electrode cells for the test. A potential of 0.2 V (for Ag/AgCl) which is sufficiently higher than the oxidation-reduction potential of each electrode was applied. Xanthine oxidase (XOD) was added to the test solution to make the final concentration 0-100 mU/ml. The change over time in the oxidation current was recorded. The results are shown in Figure 12 for Invention Product 1 and Figure 11 for Comparative Product 1. XOD had been dialyzed with a 10 ml phosphoric acid buffer solution (pH 7.0) before use. All measurements were carried out at room temperature.

As a result, it can be seen that the Comparative Product electrode is affected by a disturbance current of hydrogen peroxide, resulting in a rapid decrease in the detection current of superoxide anions, whereas a constant detection current is observed in the electrode obtained by polymerizing an imidazole-coordinated complex of [5,10,15,20-tetrakis(3-thiofuryl)porphyrinate iron (III) bis(1-methylimidazolyl)] bromide.

### INDUSTRIAL APPLICABILITY

The electrode for superoxide anions of the present invention exhibits not only the excellent performance of an electrode provided with the metal porphyrin complex polymer film, but also has the capability of preventing poisoning by a catalyst poison such as hydrogen peroxide. Accordingly, in any of *in vitro* or *in vivo* environments, this electrode for superoxide anion enables detection of superoxide anion radicals without suffering any influence from a catalyst poison such as hydrogen peroxide. In addition, it is possible to quantitatively determine these superoxide anions by combining the electrode with a counter electrode or a reference electrode. The electrode thus can be widely used in various fields.

For example, if used *in vivo,* various diseases can be specified from active oxygen species and other active radical species in the living body.

On the other hand, if used *in vitro,* superoxide anions and their concentration in food can be measured, based on which decomposition conditions of the food can be judged. Water pollution conditions can also be observed by measuring superoxide anions and their concentration in tap water, sewage water, and the like.

## Claims

1. An electrode for superoxide anions comprising a film produced by electrolytic polymerization of a metal thiofurylporphyrin/axial ligand complex formed on the surface of a conductive component.

2. The electrode for superoxide anions according to claim 1, wherein the metal thiofurylporphyrin/axial ligand complex is a compound shown by the following formula (I), 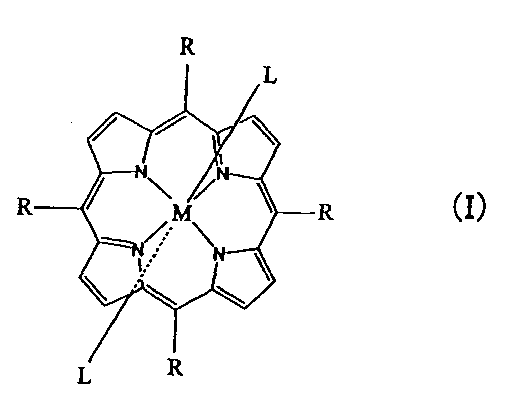 wherein M is a metal of which the oxidation-reduction potential between the two valence form and the three valence form is higher than the oxidation potential of O₂⁻. and lower than the oxidation potential of water, at least one of the four Rs indicates a thiofuryl group, and at least one of the two Ls indicates an axial ligand having a coefficient of complex formation of 10⁴ M⁻² or more that produces a stable 5 coordinated complex or 6 coordinated complex.

3. The electrode for superoxide anions according to claim 2, wherein M in the formula (I) is iron (III) or manganese (III).

4. The electrode for superoxide anions according to claim 2 or claim 3, wherein R in the formula (I) is a 2-thiofuryl group or 3-thiofuryl group.

5. The electrode for superoxide anions according to claim 2, wherein L in the formula (I) is an imidazole derivative.

6. The electrode for superoxide anions according to claim 5, wherein the imidazole derivative is an alkylimidazole or an arylalkylimidazole.

7. The electrode for superoxide anions according to any one of claims 1 to 6, wherein the conductivity of the film produced by electrolytic polymerization of a metal thiofurylporphyrin/axial ligand complex is 10⁻³ S/cm or more.

8. The electrode for superoxide anions according to any one of claims 1 to 7, wherein the electrode has excellent resistance to poison.

9. A sensor for measuring the concentration of superoxide anions comprising an electrode for active oxygen species comprising a conductive component with a polymer film of a metal thiofurylporphyrin/axial ligand complex formed on the surface, a counter electrode, and a reference electrode.

10. A sensor for measuring the concentration of superoxide anions according to claim 1, wherein the metal thiofurylporphyrin/axial ligand complex is a compound shown by the following formula (I), 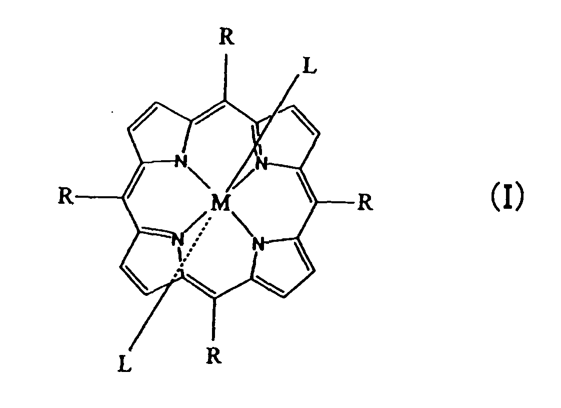 wherein M is a metal of which the oxidation-reduction potential between the two valence form and the three valence form is higher than the oxidation potential of O₂⁻. and lower than the oxidation potential of water, at least one of the four Rs indicates a thiofuryl group, and at least one of the two Ls indicates an axial ligand having a coefficient of complex formation of 10⁴ M⁻² or more that produces a stable 5 coordinated complex or 6 coordinated complex.

11. The sensor according to claim 10, wherein M in the formula (I) is iron (III) or manganese (III).

12. The sensor according to claim 10 or claim 11, wherein R in the formula (I) is a 2-thiofuryl group or 3-thiofuryl group.

13. The sensor according to claim 11, wherein L in the formula (I) is an imidazole derivative.

14. The sensor according to claim 13, wherein the imidazole derivative is an alkylimidazole or an arylalkylimidazole.

15. The sensor according to any one of claims 9 to 14, wherein the conductivity of the film produced by electrolytic polymerization of a metal thiofurylporphyrin/axial ligand complex is 10⁻³ S/cm or more.

16. The sensor according to any one of claims 9 to 15, wherein the sensor has excellent resistance to poison.

17. A method for detecting superoxide anions in a sample comprising measuring a current produced by oxidation-reduction reaction between a metal in a polymer film of a metal thiofurylporphyrin/axial ligand complex and superoxide anions using the sensor according to any one of claims 9 to 16.
